Europäisches Patentamt

European Patent Office

Office européen des brevets

(19)

(11) **EP 1 551 077 A1**

(12) ## DEMANDE DE BREVET EUROPEEN

(43) Date de publication:
**06.07.2005 Bulletin 2005/27**

(51) Int Cl.⁷: **H01Q 1/24**, H04B 1/38

(21) Numéro de dépôt: **04292968.7**

(22) Date de dépôt: **13.12.2004**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **30.12.2003 FR 0315553**

(71) Demandeur: **SAGEM S.A.**
**75015 Paris (FR)**

(72) Inventeur: **Derat, Benoit**
**75012 Paris (FR)**

(74) Mandataire: **Maillet, Alain**
**Cabinet le Guen & Maillet,**
**5, Place Newquay,**
**B.P. 70250**
**35802 Dinard Cedex (FR)**

(54) **Procédé de diminution du SAR d'un téléphone mobile et téléphone mobile qui comprend des moyens pour abaisser le SAR**

(57) La présente invention concerne un procédé de diminution du SAR d'un téléphone mobile. Elle concerne également un téléphone mobile qui comprend des moyens pour abaisser le SAR comparé à un téléphone mobile qui ne comporterait pas lesdits moyens.

Le procédé de diminution du SAR d'un téléphone mobile est caractérisé en ce qu'il consiste à considérer au moins un élément de structure dudit téléphone mobile qui est passif d'un point de vue radiofréquence mais électriquement conducteur et à modifier un ou ledit élément de manière à diminuer le facteur de qualité dudit téléphone ou la quantité d'énergie stockée dans ledit téléphone et, ce, pour la fréquence de résonance à laquelle on veut diminuer le SAR.

Fig. 1

EP 1 551 077 A1

**Description**

DOMAINE TECHNIQUE DE L'INVENTION

La présente invention concerne un procédé de diminution du SAR d'un téléphone mobile. Elle concerne également un téléphone mobile qui comprend des moyens pour abaisser le SAR comparé à un téléphone mobile qui ne comporterait pas lesdits moyens.

ARRIERE-PLAN TECHNOLOGIQUE DE L'INVENTION

En utilisation normale, un téléphone mobile est porté contre un côté de la tête de son utilisateur de manière que l'écouteur soit à proximité de l'oreille et le microphone vers la bouche de l'utilisateur. Il est par ailleurs tenu à la main. En fonctionnement normal, un téléphone mobile émet des ondes électromagnétiques. Ainsi, de part la position du téléphone contre la face de l'utilisateur, des ondes sont absorbées par la tête de ce dernier ce qui peut provoquer un échauffement des tissus de la tête au voisinage du téléphone mobile. Par ailleurs, la puissance qui est absorbée par la tête de l'utilisateur n'est pas disponible pour l'émission ce qui contribue à une perte d'énergie non-souhaitable.
Afin d'éviter d'éventuels dommages provoqués par ces ondes absorbées, il a été proposé de limiter la puissance absorbée par unité de masse de tissus encore appelée SAR (Specific Absorption Rate). Des normes ou standards fixent ainsi des valeurs maximales que les constructeurs ne peuvent dépasser. Par exemple, en Europe, les valeurs à ne pas dépasser sont de 2 Watts/Kg dans une bande de fréquence comprise entre 0,1 MHz et 10 GHz.
Des solutions techniques ont été trouvées pour diminuer le SAR de manière à ne pas dépasser les seuils autorisés. Par exemple, une des solutions connues consiste à interposer une plaque-écran métallique entre l'utilisateur et les parties rayonnantes du téléphone mobile de manière à limiter le rayonnement en direction de la tête de l'utilisateur. Plus spécifiquement, le document US-A-2003/0083018 décrit un téléphone mobile qui est pourvu d'une plaque-écran métallique interposée entre le boîtier du téléphone mobile côté utilisateur et la platine sur laquelle sont montés tous les circuits électroniques, notamment les circuits radio-fréquence et l'antenne du téléphone, platine généralement appelée PCB (PCB = Printed Circuit Board). Cette plaque-écran est reliée à la platine en un point de plus faible potentiel. En modifiant la forme de cette plaque-écran, qui peut être imprimée sur la face interne du boîtier côté destiné à être tournée vers l'utilisateur, on modifie la répartition des densités de courant sur la platine ce qui a pour effet une modification du SAR. En ajustant ainsi cette forme, il est possible de diminuer le SAR et en même temps d'améliorer les conditions de rayonnement du téléphone mobile.
L'inconvénient principal de cette solution réside dans le fait qu'une plaque-écran doit être prévue ce qui augmente l'épaisseur du téléphone ainsi équipé et grève son coût. De plus, dans la pratique, si diminution du SAR il y a, c'est au détriment de la puissance rayonnée utile.
Une autre solution a été proposée par le document WO-A-02/071534 qui consiste à munir le téléphone mobile d'un élément perturbateur qui a pour effet de modifier la répartition des courants haute-fréquence induits sur la platine. Plus exactement, les maxima des densités de courant sur la platine sont diminués entraînant par conséquent une diminution du SAR. Cet élément perturbateur est généralement une pièce métallique rapportée à la platine et qui s'étend sensiblement dans son plan. Différents modes de réalisation de cet élément perturbateur sont présentés dans le document mentionné ci-dessus.
Pour pouvoir être mise en oeuvre, cette solution nécessite que soit connu la distribution des courants sur l'ensemble de la structure afin de la modifier à bonne escient. Pour ce faire, il est nécessaire d'effectuer des mesures locales de densités de courants qui s'avèrent généralement délicates à mettre en oeuvre. Par ailleurs, cette solution entraîne nécessairement des modifications du diagramme de rayonnement du téléphone mobile qu'elle ne prend pas directement en compte.
L'inconvénient de cette solution réside aussi dans le fait qu'est nécessaire pour sa mise en oeuvre l'ajout d'éléments ce qui augmente l'épaisseur du téléphone ainsi équipé et grève son coût.
Le but de la présente invention est de résoudre les problèmes mentionnés ci-dessus et, en particulier, de proposer une solution pour la réduction du SAR qui n'entraîne ni modification importante de la structure ni dégradation du diagramme de rayonnement d'un téléphone mobile dont la conception générale est terminée. Il est également de proposer une solution qui ne demande au concepteur qu'une maîtrise de grandeurs globales facilement mesurables et non locales.

DESCRIPTION GENERALE

Afin d'atteindre le but mentionné ci-dessus, la présente invention concerne un procédé de diminution du SAR d'un téléphone mobile qui est caractérisé en ce qu'il consiste à considérer au moins un élément de structure dudit téléphone mobile qui est passif d'un point de vue radiofréquence mais électriquement conducteur et à modifier un ou ledit élément de manière à diminuer le facteur de qualité dudit téléphone ou la quantité d'énergie stockée dans le champ électromagnétique au voisinage dudit téléphone et, ce, pour la fréquence de résonance à laquelle on veut diminuer le SAR.

Ce procédé, selon une autre caractéristique de la présente invention, consiste à mesurer la bande passante et la valeur minimale d'une grandeur électrique représentative des puissances transmise et réfléchie par l'antenne dudit téléphone mobile autour de la fréquence pour laquelle une diminution de SAR est désirée et à en déduire la quantité d'énergie stockée dans le champ électromagnétique au voisinage dudit téléphone.

Ladite grandeur électrique est avantageusement l'une des suivantes : Rapport ou Taux d'Onde Stationnaire (ROS ou TOS, en anglais SWR ( Standing Wave Ratio)), le coefficient de réflexion, ou perte en retour $S_{11}$, etc.

Ledit ou un desdits éléments de structure peut être un cadre supportant une platine électronique dudit téléphone mobile. Il peut également être un cadre formant bride pour l'écran de visualisation dudit téléphone mobile. Dans ces cas, l'étape de modification dudit élément consiste à introduire au moins une discontinuité dans le parcours des courants induits qui circulent dans ledit élément. Selon un premier mode de réalisation, un ou ladite discontinuité est une entaille. Selon un autre mode de réalisation, une ou ladite discontinuité est au moins un trou percé dans ledit cadre.

La présente invention concerne également un téléphone mobile du type comportant des circuits d'émission radiofréquence reliés à une antenne et montés sur une platine, un écran de visualisation monté sur ladite platine au moyen d'une bride formant cadre, ladite bride étant passive d'un point de vue radiofréquence mais électriquement conductrice. Il est alors caractérisé en ce que ladite bride comporte au moins une discontinuité dans le parcours des courants qui y sont induits par lesdits circuits d'émission.

IL peut s'agir également d'un téléphone mobile du type comportant des circuits d'émission radiofréquence reliés à une antenne et montés sur une platine, ladite platine étant montée sur un cadre en tant qu'élément de structure, ledit cadre étant passif d'un point de vue radiofréquence mais électriquement conducteur. Il est alors caractérisé en ce que ledit cadre comporte au moins une discontinuité dans le parcours des courants qui y sont induits par lesdits circuits d'émission.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est une vue en perspective d'un téléphone portable démonté et pourvu des moyens caractéristiques de la présente invention,

Les Figs. 2a et 2b sont respectivement une vue de dessus d'un téléphone portable selon l'état de la technique et le graphique représentant l'amplitude du paramètre $s_{11}$ en fonction de la fréquence et, ce, dans une bande de fréquence de l'ordre de 0,9GHz,

Les Figs. 3a et 3b sont respectivement une vue de dessus d'un téléphone portable équipé de moyens caractéristiques de la présente invention ainsi que le graphe représentant l'amplitude du paramètre $s_{11}$ en fonction de la fréquence,

Les Figs. 4a et 4b sont respectivement une vue de dessus d'un téléphone portable équipé de moyens caractéristiques de la présente invention ainsi que le graphe représentant l'amplitude du paramètre $s_{11}$ en fonction de la fréquence.

DESCRIPTION DES MODES DE REALISATION PREFERES DE L'INVENTION

Comme on le comprendra par la suite, le principe de la présente invention est de minimiser le facteur de qualité de la structure globale d'un téléphone mobile existant (c'est-à-dire un téléphone mobile pour lequel la conception de sa structure globale est terminée) pour la fréquence de résonance à laquelle est désirée une diminution du SAR, c'est-à-dire généralement dans la bande GSM. Plus précisément, on cherche à diminuer l'énergie stockée, en gardant tout au moins constante la puissance rayonnée. On appelle facteur de qualité une grandeur qui est proportionnelle au rapport de l'énergie stockée dans la structure du téléphone à la puissance rayonnée par celui-ci.

On rappelle que toute structure qui est parcourue pas des courants oscillants est le siège, d'une part, d'un champ réactif agissant sur des faibles distances (champs dits en terminologie anglo-saxonne : Near Field) de l'ordre de quelques longueurs d'onde, avec pour conséquence une énergie réactive stockée sur ladite structure et, d'autre part, d'un champ radiatif agissant à longue distance (champs dits : Far Field) avec pour conséquence une énergie rayonnée.

L'expression mathématique du facteur de qualité Q peut ainsi être donnée par la relation suivante :

$$Q = \frac{\omega_r \, W_{stockée}}{P_{dissipée}} \qquad \text{(équation 1)}$$

où $\omega_r$ est la pulsation correspondant à la fréquence de résonance considérée, $W_{stockée}$ est l'énergie stockée sous forme réactive, et $P_{dissipée}$ la puissance dissipée à la fréquence de résonance de l'ensemble de la structure. On notera que cette puissance dissipée $P_{dissipée}$ englobe la puissance rayonnée mais aussi celle qui est perdue dans les diélectriques et les conducteurs, par exemple reliant l'antenne au circuit imprimé de l'appareil (généralement dit PCB).

On notera que c'est la fréquence de résonance qui est considérée ici car les nombreuses simulations et mesures effectuées ont toujours révélé que c'est au voisinage de la fréquence de résonance en présence du fantôme que le SAR est maximum. On a constaté aussi la relation linéaire entre énergie stockée à la résonance proche du fantôme, et énergie stockée à la résonance en espace libre. On peut donc se contenter de considérer l'énergie stockée à la résonance sans fantôme.

On notera encore que dans l'expression qui est donnée ci-dessus, la fréquence de résonance qui doit être considérée est la fréquence pour laquelle le coefficient de réflexion à l'entrée de l'antenne (Paramètre $S_{11}$) de l'appareil est minimal, laquelle est en général différente de celle pour laquelle la partie imaginaire de l'impédance de la même antenne s'annule.

La présente invention est basée sur le fait qu'une réduction du facteur de qualité Q à la fréquence de résonance pour laquelle on veut une diminution du SAR, joue en faveur de l'augmentation du rapport puissance dissipée sur SAR (ainsi que de l'augmentation de la bande passante de l'appareil à la fréquence considérée). En effet, on considère qu'il y a une relation de cause à effet entre les champs réactifs proches, largement dominés par les modes évanescents et contribuant fortement à l'énergie stockée, et le coefficient SAR.

La présente invention consiste donc à considérer au moins un élément présent dans un téléphone mobile qui est passif d'un point de vue radiofréquence mais qui est électriquement conducteur et qui n'a pas donc pas pour fonction première de réduire le SAR et à modifier cet élément de manière à diminuer le facteur de qualité jusqu'à un minimum possible et, ce, pour la fréquence de résonance à laquelle on veut un minimum de SAR.

Dans la pratique, on établit une relation entre le facteur de qualité et les caractéristiques radioélectriques du téléphone autour de la fréquence de résonance, puis on pratique des modifications de l'élément précédemment considéré afin d'abaisser ce facteur de qualité.

Les caractéristiques radioélectriques en question sont obtenues par mesure d'une grandeur radioélectrique G représentative des puissances transmise et réfléchie par l'antenne dudit téléphone mobile dans une bande de fréquence autour de la fréquence pour laquelle on désire abaisser le SAR. Cette grandeur radioélectrique est par exemple le Rapport d'Onde Stationnaire ROS ou TOS, ou SWR (Standing Wave Ratio), la perte en retour $S_{11}$ ou coefficient de réflexion en tension généralement noté $\Gamma$, etc. De la mesure de cette grandeur radioélectrique G, on en déduit la bande passante BW ainsi que la valeur minimale $G_r$ de cette grandeur, correspondant à la fréquence de résonance $f_r$. A l'aide de ces deux éléments BW et $G_r$, on en déduit l'énergie stockée.

On démontre ci-dessous une expression de la quantité d'énergie stockée en fonction de la perte en retour $S_{11}$ mesurée dans la bande de fréquence considérée. Pour ce faire, on assimile l'impédance de l'antenne à un circuit résonnant RLC parallèle, et le châssis à une impédance parallèle à ce RLC (constante due à son faible facteur de qualité). Dans ce cas, en supposant en outre l'antenne adaptée en impédance à la fréquence de résonance, le facteur de qualité Q et la bande passante BW à -6dB sont liées par la relation suivante :

$$Q = \frac{1}{BW} \times \frac{2}{\sqrt{3}} \qquad \text{(équation 2)}$$

(Voir à ce sujet, l'article de HUGO F.PUES paru dans IEEE Transactions on Antennas and Propagation, vol 37, No 11, Novembre 1989, dans le cas d'antennes à microruban)

On peut alors en déduire, à partir des deux équations ci-dessus, l'expression de l'énergie totale stockée à la fréquence de résonance, normalisée par rapport à la puissance dissipée $P_{dissipée}$:

$$Wn = \frac{W_{stockée}}{P_{dissipée}} = \frac{2}{\omega_r BW} \times \frac{2}{\sqrt{3}} \times \left(1 - \left|S_{11}\right|_r^2\right) \qquad \text{(équation 3)}$$

Ainsi, lorsqu'on constate qu'une modification d'un élément de structure d'un téléphone entraîne un abaissement de l'énergie stockée telle que calculée par l'expression ci-dessus, on peut en déduire que corrélativement le SAR a diminué.

La méthode donnée ci-dessus permet ainsi de valider qu'une modification d'un élément de structure d'un téléphone entraîne bien une diminution du SAR. Elle permet également de sélectionner parmi plusieurs modifications envisagées d'un même appareil dont la conception est quasi-terminée, celle qui donnera le meilleur résultat d'un point de vue du SAR.

On va décrire un mode de réalisation de la présente invention pour lequel l'élément en question est une bride qui a pour fonction première de protéger l'écran de visualisation de décharges électrostatiques mais aussi d'assurer une tenue mécanique audit écran.

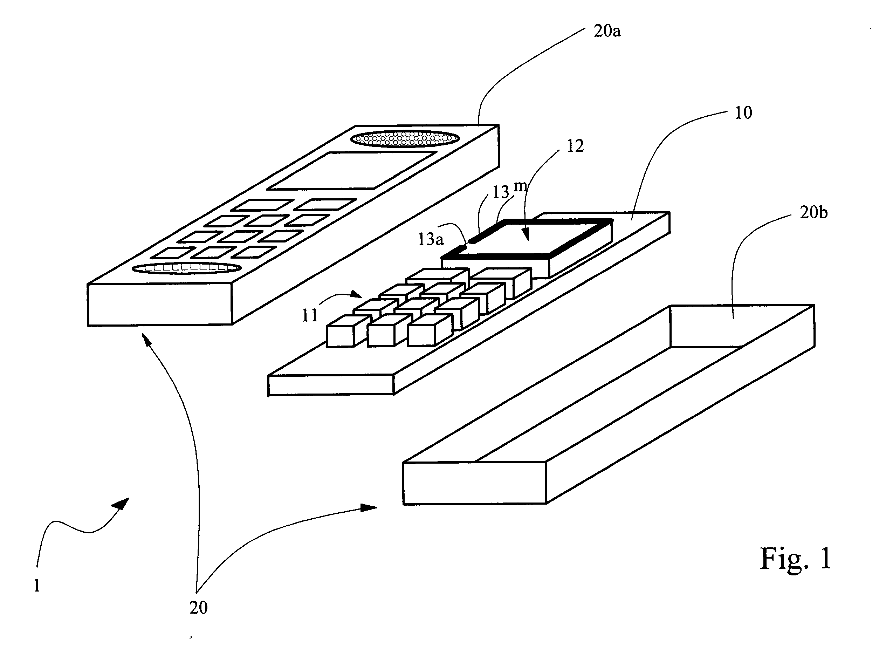

Le téléphone portable représenté à la Fig. 1 comporte essentiellement une platine 10 ou PCB (Printed Circuit Board) sur laquelle sont montés tous les circuits notamment les circuits électroniques de l'appareil et, en particulier, les circuits d'émission et de réception radiofréquences de l'appareil, l'antenne reliée auxdits circuits d'émission et de réception radiofréquence, un clavier 11, un écouteur ou haut-parleur, un microphone et l'écran d'affichage 12. Il comporte un boîtier 20 qui est formé, d'une part, d'une demi-coque 20a destinée à se trouver contre la tête de l'utilisateur lorsque le téléphone portable est en utilisation normal avec l'écouteur à proximité de l'oreille de l'utilisateur et le microphone à proximité de sa bouche et, d'autre part, d'une demi-coque 20b qui ferme le boîtier 20 en enfermant la platine 10.

L'écran de visualisation 12, par exemple du type afficheur à cristaux liquides, est généralement pourvu d'une bride métallique 13 qui non seulement assure une protection de l'utilisateur aux décharges électrostatiques mais aussi une tenue mécanique de l'écran de visualisation 12 sur la platine 10. Elle a une forme générale rectangulaire formant cadre autour de l'écran de visualisation 12.

On notera que ladite bride est passive d'un point de vue radiofréquence. Cela signifie qu'elle ne joue pas de rôle actif direct dans les processus d'émission et de réception des ondes radiofréquences.

Selon le mode de réalisation représenté de la présente invention, la bride 13 est électriquement reliée, directement ou indirectement par l'intermédiaire d'un ou plusieurs éléments de couplage tels que condensateurs, inductances, etc., à la masse électrique de la platine 10, par exemple, en un point m de celle-ci où la densité de courant est relativement faible.

Selon un mode de réalisation de la présente invention représenté à la Fig. 1, afin de diminuer le facteur de qualité Q de l'appareil téléphonique à la fréquence de résonance correspondant à une fréquence d'émission dans la bande GSM, la bride 13 est pourvue d'au moins une discontinuité (en l'occurrence une), telle qu'une entaille 13a située sur la périphérie de la bride 13. Cette entaille crée une discontinuité dans le parcours des courants induits par les circuits d'émission radiofréquence et qui circulent dans ladite bride, induisant en conséquence des modifications de la distribution des courants sur l'ensemble de la structure du téléphone. Or, ces courants sont à l'origine de champs réactifs à courte distance, et ces modifications ont pour résultat de réduire la quantité d'énergie stockée sur cette structure.

Une telle discontinuité, telle que l'entaille 13a, n'altère pas les caractéristiques de protection aux décharges électrostatiques de la bride 13. Il est possible de combler cette entaille par un diélectrique de manière à ne pas perturber la caractéristique de tenue mécanique que la bride permet.

On notera qu'une telle discontinuité pourrait être au moins un trou percé dans ladite bride de manière là aussi à modifier le parcours des courants induits par les circuits d'émission radiofréquence qui circulent dans ladite bride.

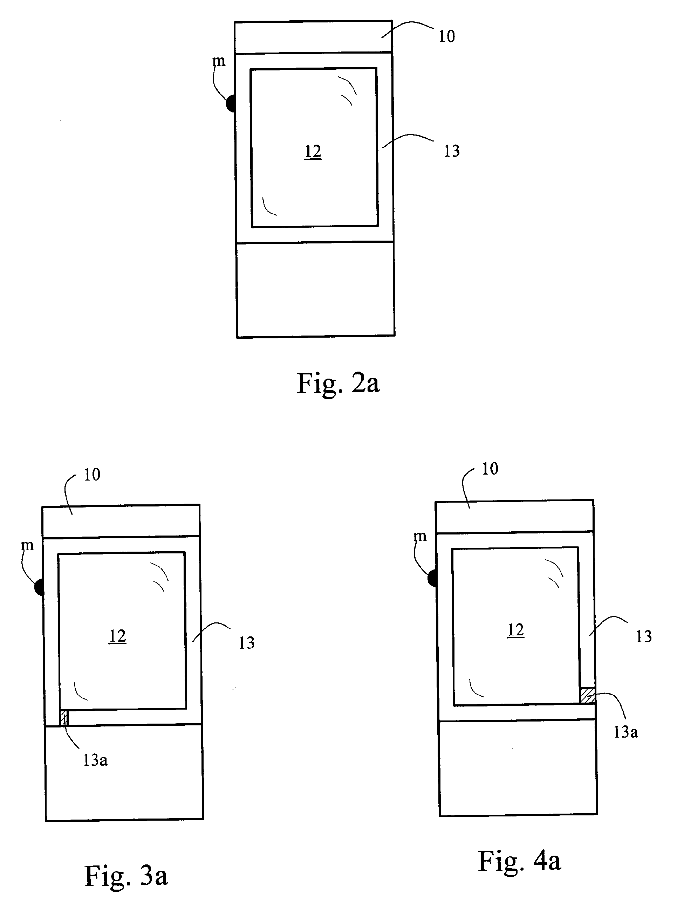

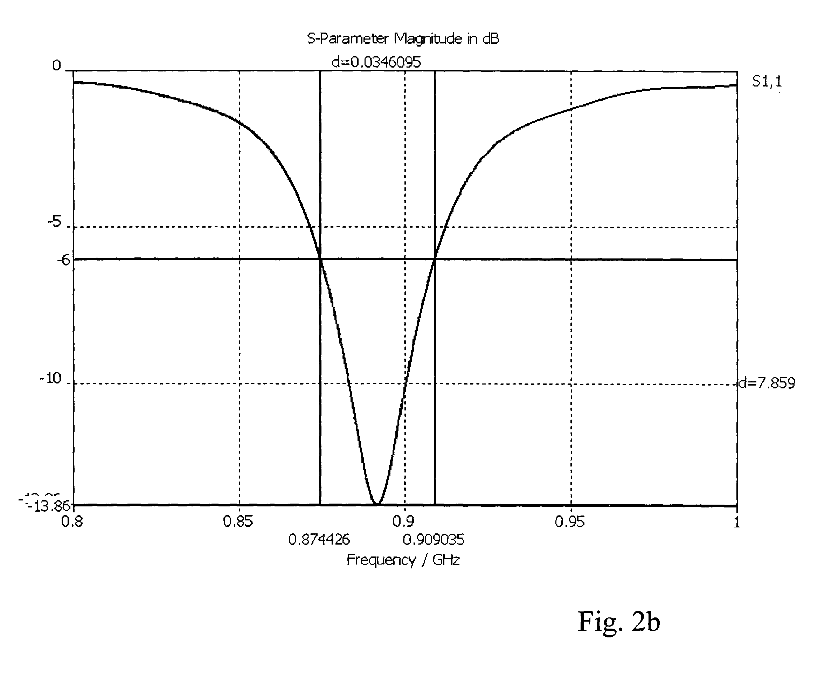

On a représenté à la Fig. 2b, l'amplitude (en échelle logarithmique) en fonction de la fréquence du paramètre $s_{11}$ (paramètre S correspondant au coefficient de réflexion d'entrée) mesurée avec un téléphone portable qui ne comporte pas les dispositions de la présente invention à une fréquence de résonance de l'ordre de 0,9 GHz. Ce téléphone portable est visible vu de dessus à la Fig. 2a où l'on reconnaît la platine 10, l'écran de visualisation 12 et sa bride 13. On voit sur cette Fig. 2b que la bande passante BW à -6dB est 34,60 MHz et que l'amplitude minimale est -13dB. En utilisant l'expression ci-dessus, la quantité d'énergie stockée Wn calculée (normalisée par la puissance dissipée et multipliée par une puissance de 10) est de 0,103.

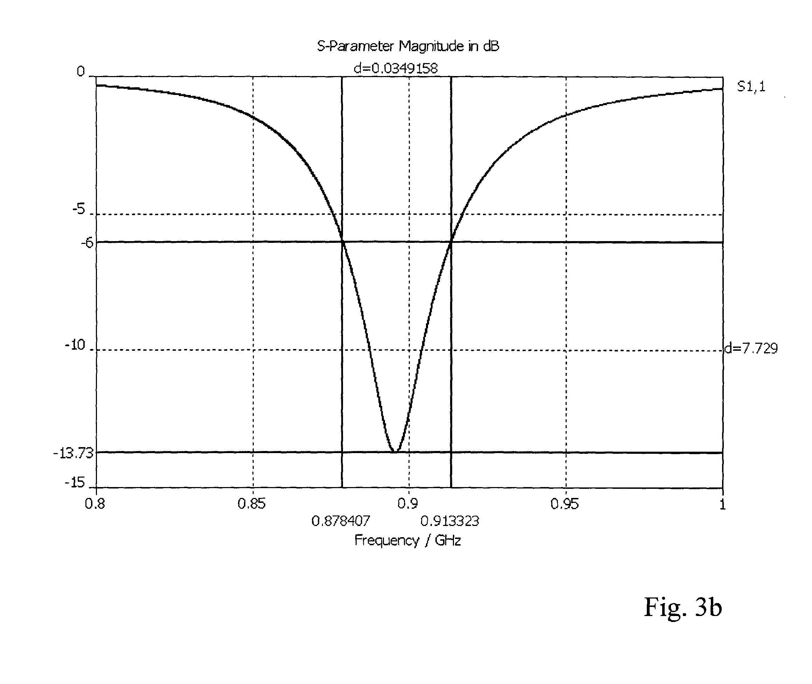

De même, on a représenté à la Fig. 3b, l'amplitude (en échelle logarithmique) en fonction de la fréquence du paramètre $s_{11}$ mesurée avec un téléphone portable dont la bride d'écran 13 comporte une entaille 13a dans le coin inférieur gauche (la prise de masse m étant sur la branche longitudinale gauche de la bride 13) et sur la branche transversale de la bride 13 (voir Fig. 3a). On voit sur la Fig. 3b que la bande passante BW à -6dB est de 34,9158 MHz et que l'amplitude minimale est -13,73 dB. En utilisant l'expression ci-dessus, la quantité d'énergie stockée Wn calculée (normalisée par la puissance dissipée et multipliée par la même puissance de 10) est de 0,101.

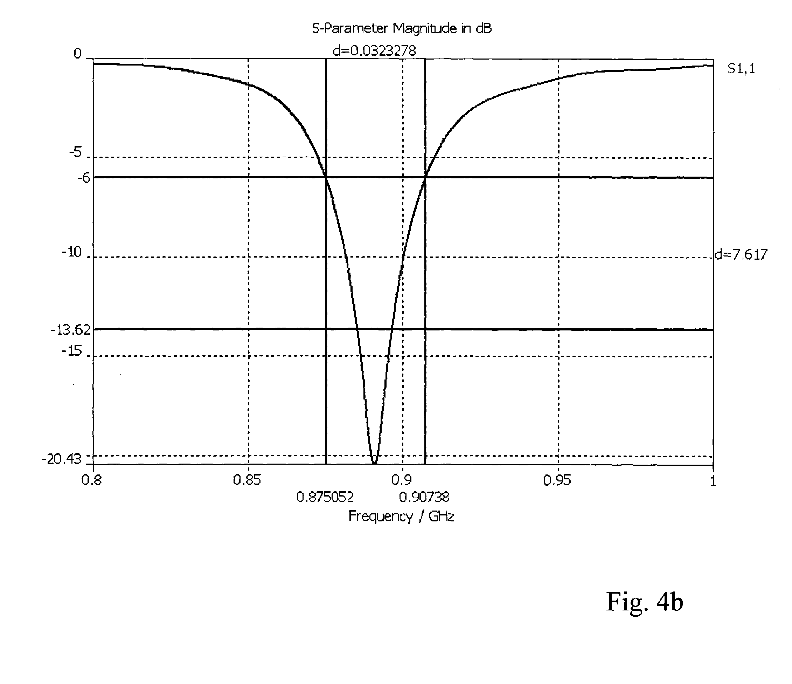

On a également représenté à la Fig. 4b, l'amplitude (en échelle logarithmique) en fonction de la fréquence du paramètre $s_{11}$ mesurée avec un téléphone portable dont la bride d'écran 13 comporte une entaille 13a dans le coin inférieur droit (la prise de masse m étant toujours sur la branche longitudinale gauche de la bride 13) et sur la branche longitudinale de la bride 13 (voir Fig. 4a). On voit sur la Fig. 4b que la bande passante BW à -6dB est de 32,3278 MHz et que l'amplitude minimale est -20,43 dB. En utilisant l'expression ci-dessus, la quantité d'énergie stockée Wn calculée (normalisée par la puissance dissipée et multipliée par la même puissance de 10) est de 0,112.

On a mesuré par ailleurs pour chacune des structures respectivement représentées aux Figs. 2a, 3a et 4a, le SAR et on a pu constater qu'effectivement, l'augmentation de l'énergie stockée entraîne la croissance du SAR et réciproquement.

Enfin, le principe de la présente invention pourrait être étendu à d'autres éléments structurels existants du téléphone portable qui ne soient pas actifs d'un point de vue radiofréquence et qui soient néanmoins électriquement conducteurs, tels par exemple un cadre métallique qui ceinturerait la platine et qui comporterait donc au moins une discontinuité de manière à ce que le facteur de qualité du téléphone soit diminuée par rapport à la situation où une telle discontinuité ne serait pas présente.

## Revendications

1. Procédé de diminution du SAR d'un téléphone mobile, **caractérisé en ce qu'**il consiste à considérer au moins un élément de structure dudit téléphone mobile qui est passif d'un point de vue radiofréquence mais électriquement conducteur et à modifier un ou ledit élément de manière à diminuer le facteur de qualité dudit téléphone ou la quantité d'énergie stockée dans ledit téléphone et, ce, pour la fréquence de résonance à laquelle on veut diminuer le SAR.

2. Procédé selon la revendication 1, **caractérisé en ce qu'**il consiste à mesurer la bande passante et la valeur minimale d'une grandeur électrique représentative des puissances transmise et réfléchie par l'antenne dudit téléphone mobile autour de la fréquence pour laquelle une diminution de SAR est désirée et à en déduire la quantité d'énergie stockée dans ledit téléphone.

3. Procédé selon la revendication 2, **caractérisé en ce que** ladite grandeur électrique est l'une des suivantes : Rapport ou Taux d'Onde Stationnaire (ROS ou TOS), SWR ( Standing Wave Ratio), le coefficient de réflexion, la perte en retour $S_{11}$, etc.

4. Procédé selon la revendication 3, **caractérisé en ce que** l'énergie stockée $W_{stockée}$ est calculée d'après la relation suivante :

$$Wn = \frac{W_{stockée}}{P_{dissipée}} = \frac{2}{\omega_r BW} \times \frac{2}{\sqrt{3}} \times \left(1 - |S_{11}|_r^2\right) \qquad \text{(équation 3)}$$

où Wn est l'énergie stockée normalisée par rapport à la puissance dissipée $P_{dissipée}$, $\omega_r$ est la pulsation correspondant à la fréquence de résonance considérée, BW la bande passante autour de cette fréquence de résonance et $S_{11}$ la perte en retour.

5. Procédé selon une des revendications précédentes, **caractérisé en ce que** ledit ou un desdits éléments de structure est un cadre supportant une platine électronique dudit téléphone mobile.

6. Procédé selon une des revendications précédentes, **caractérisé en ce que** ledit ou un desdits éléments de structure est un cadre formant bride pour l'écran de visualisation dudit téléphone mobile.

7. Procédé selon une des revendications 5 ou 6, **caractérisé en ce que** l'étape de modification dudit élément consiste à introduire au moins une discontinuité dans le parcours des courants induits qui circulent dans ledit élément.

8. Procédé selon la revendication 7, **caractérisé en ce qu'**une ou ladite discontinuité est une entaille.

9. Procédé selon la revendication 7, **caractérisé en ce qu'**une ou ladite discontinuité est au moins un trou percé dans ledit cadre.

10. Téléphone mobile du type comportant des circuits d'émission radiofréquence reliés à une antenne et montés sur une platine, un écran de visualisation monté sur ladite platine au moyen d'une bride formant cadre, ladite bride étant passive d'un point de vue radiofréquence mais électriquement conductrice, **caractérisé en ce que** ladite bride comporte au moins une discontinuité dans le parcours des courants qui y sont induits par lesdits circuits d'émission.

11. Téléphone mobile du type comportant des circuits d'émission radiofréquence reliés à une antenne et montés sur une platine, ladite platine étant montée sur un cadre en tant qu'élément de structure, ledit cadre étant passif d'un point de vue radiofréquence mais électriquement conducteur, **caractérisé en ce que** ledit cadre comporte au moins une discontinuité dans le parcours des courants qui y sont induits par lesdits circuits d'émission.

12. Téléphone mobile selon la revendication 10 ou 11, **caractérisé en ce qu'**une ou ladite discontinuité est une entaille.

13. Téléphone mobile selon la revendication 10 ou 11, **caractérisé en ce qu'**une ou ladite discontinuité est au moins un trou percé dans ledit cadre.

Fig. 1

Fig. 2a

Fig. 3a

Fig. 4a

Fig. 2b

Fig. 3b

Fig. 4b

EP 1 551 077 A1

**EP 1 551 077 A1**

Office européen
des brevets

**RAPPORT DE RECHERCHE EUROPEENNE**

Numéro de la demande

EP 04 29 2968

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 331 691 A (SONY INT EUROP GMBH) 30 juillet 2003 (2003-07-30) | 1-5 | H01Q1/24 H04B1/38 |
| A | * colonne 3, ligne 45 - colonne 5, ligne 56 * | 10 | |
| X | WO 02/21633 A (KWON JONG HWA ; YUN JE HOON (KR); CHOI JAE ICK (KR); LEE TAE YUNE (KR)) 14 mars 2002 (2002-03-14) * page 8, ligne 1-15 * | 1-3 | |
| D,X | WO 02/071534 A (SCHREIBER MICHAEL ; WEINBERGER MARTIN (DE); HUBER STEFAN (DE); LARKAMP) 12 septembre 2002 (2002-09-12) * pages 15-24; figures 1,8 * | 11-13 | |
| A | | 6-9 | |
| D,A | PUES H F ET AL: "AN IMPEDANCE-MATCHING TECHNIQUE FOR INCREASING THE BANDWIDTH OF MICROSTRIP ANTENNAS" IEEE TRANSACTIONS ON ANTENNAS AND PROPAGATION, IEEE INC. NEW YORK, US, vol. 37, no. 11, 1 novembre 1989 (1989-11-01), pages 1345-1354, XP000100599 ISSN: 0018-926X * abrégé * | 1-4 | **DOMAINES TECHNIQUES RECHERCHES (Int.Cl.7)** H01Q H04B |
| D,A | US 2003/083018 A1 (STEWART WILLIAM P ET AL) 1 mai 2003 (2003-05-01) * abrégé * | 1,11 | |

Le présent rapport a été établi pour toutes les revendications

| Lieu de la recherche | Date d'achèvement de la recherche | Examinateur |
|---|---|---|
| Munich | 15 avril 2005 | Ribbe, J |

**EP 1 551 077 A1**

## ANNEXE AU RAPPORT DE RECHERCHE EUROPEENNE
## RELATIF A LA DEMANDE DE BREVET EUROPEEN NO.

EP 04 29 2968

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-04-2005

| Document brevet cité au rapport de recherche | | Date de publication | Membre(s) de la famille de brevet(s) | | Date de publication |
|---|---|---|---|---|---|
| EP 1331691 | A | 30-07-2003 | EP | 1331691 A1 | 30-07-2003 |
| | | | DE | 60201878 D1 | 16-12-2004 |
| | | | DE | 60201878 T2 | 17-03-2005 |
| WO 0221633 | A | 14-03-2002 | KR | 2002018796 A | 09-03-2002 |
| | | | KR | 2002019203 A | 12-03-2002 |
| | | | KR | 2002019201 A | 12-03-2002 |
| | | | KR | 2002019202 A | 12-03-2002 |
| | | | AU | 8024301 A | 22-03-2002 |
| | | | WO | 0221633 A1 | 14-03-2002 |
| | | | US | 2004023682 A1 | 05-02-2004 |
| WO 02071534 | A | 12-09-2002 | DE | 10110982 A1 | 19-09-2002 |
| | | | DE | 10206415 A1 | 28-08-2003 |
| | | | CN | 1507674 A | 23-06-2004 |
| | | | WO | 02071534 A1 | 12-09-2002 |
| | | | EP | 1368856 A1 | 10-12-2003 |
| | | | JP | 2004524747 T | 12-08-2004 |
| | | | US | 2004046701 A1 | 11-03-2004 |
| US 2003083018 | A1 | 01-05-2003 | EP | 1440518 A1 | 28-07-2004 |
| | | | WO | 03039016 A1 | 08-05-2003 |

EPO FORM P0460